(19) Europäisches Patentamt / European Patent Office / Office européen des brevets

(11) **EP 1 690 765 B1**

(12) **EUROPÄISCHE PATENTSCHRIFT**

(45) Veröffentlichungstag und Bekanntmachung des Hinweises auf die Patenterteilung:
**15.12.2010 Patentblatt 2010/50**

(51) Int Cl.:
***B60T 7/12*** *(2006.01)*     ***B60T 8/32*** *(2006.01)*

(21) Anmeldenummer: **06110319.8**

(22) Anmeldetag: **29.01.2003**

(54) **Verfahren und Vorrichtung zur Steuerung einer Bremsanlage**

Method and device for controlling a braking system

Méthode et dispositif de contrôle d'un système de freinage

(84) Benannte Vertragsstaaten:
**DE FR GB**

(43) Veröffentlichungstag der Anmeldung:
**16.08.2006 Patentblatt 2006/33**

(62) Dokumentnummer(n) der früheren Anmeldung(en) nach Art. 76 EPÜ:
**03100178.7 / 1 442 951**

(73) Patentinhaber: **Ford Global Technologies, LLC Dearborn, MI 48126 (US)**

(72) Erfinder:
• **Urhahne, Joseph**
  **50259 Pulheim (DE)**
• **Risse, Hermann-Josef Dr.**
  **50767 Köln (DE)**

(74) Vertreter: **Drömer, Hans-Carsten et al Ford-Werke Aktiengesellschaft Patentabteilung NH/DRP Henry-Ford-Strasse 1 50725 Köln (DE)**

(56) Entgegenhaltungen:
**DE-A1- 10 128 155**

**Beschreibung**

Die vorliegende Erfindung betrifft ein Verfahren zur Steuerung der Bremsanlage eines Fahrzeugs mit einer Hillholder-Funktion. Im Rahmen einer Hillholder-Funktion wird eine vorhandene Bremsanlage, die geeignet ist, ein Verfahren zur Stabilisierung eines Fahrzeugs bei kritischen dynamischen Fahrzuständen durchzuführen, soweit modifiziert, dass die Bremsanlage in der Lage ist, eine Anfahrhilfe für das Fahrzeug an Steigungen bereitzustellen. Die Erfindung betrifft weiterhin eine Bremsanlage, die dazu geeignet ist, das vorher beschriebene Verfahren durchzuführen.

Anfahrhilfen an Steigungen (auch "Hillholder" genannt) sind z.B. aus der DE 199 31 345 bekannt. Dabei werden die vorhandenen Möglichkeiten eines elektromechanischen Bremssystems um Sensoren bzw. Fahrerwunscherkennungssysteme erweitert, um so die gewünschte Komfortsteigerung zu erreichen.

In der DE 196 21 628 wird eine automatische Feststellbremsfunktion (Hillholder) vorgeschlagen, die aktiviert wird, sobald das Fahrzeug bei betätigter Betriebsbremse zum Stillstand kommt. Der dann herrschende Bremsdruck bzw. die sich daraus ergebende Bremskraft wird an wenigstens einer Radbremse unabhängig vom Ausmaß der Betätigung des Bremspedals gehalten bzw. aufgebaut und bei Lösen des Bremspedals wieder abgebaut. Eine derartige Hillholderfunktion vermeidet umfangreiche Sicherheitsmassnahmen, so übernimmt z.B. zur Anfahrunterstützung an Steigungen bei gleichzeitiger Betätigung von Brems- und Kupplungspedal bei Lösen des Bremspedals das Kupplungspedal die Aktivierung bzw. Deaktivierung der Hillholderfunktion.

Die DE 101 28 155 A1 betrifft eine Bremsanlage für Fahrzeuge, die mit einer Bremsdruck-Halteeinrichtung zum kontinuierlichen Halten des Bremsfluiddrucks, insbesondere Bremsflüssigkeitsdrucks, nach dem Loslassen des Bremspedals ausgestattet ist. Dazu wird eine Bremsanlage für Fahrzeuge bereitgestellt, bei der mehrere Systeme einzelner und voneinander getrennter Bremsfluidleitungen vorgesehen sind und jede Leitung mit zumindest einer Bremsdruck-Halteeinrichtung versehen ist. Deren Aufgabe ist es, nach dem Loslassen des Bremspedals den Bremsfluiddruck in einem in der Bremsfluidleitung angeordneten Radzylinder kontinuierlich zu halten und den gehaltenen Druck in Abhängigkeit von einer Zunahme der Anfahr-Antriebskraft des Fahrzeugs aufzuheben bzw. abzubauen, wobei dieser Druckabbau an jeder Druckhalteeinrichtung zeitversetzt erfolgt, um ein ruckfreies Anfahren zu ermöglichen.

Aus der DE 199 50 034 ist ein Verfahren bekannt, bei dem eine Hillholderfunktion mit einfachen Mitteln verwirklicht wird. Dabei wird nach erkanntem Stillstand des Fahrzeugs die Bremskraft aufrecht erhalten und nach Lösen des Bremspedals die Bremskraft z. B. nach einer gewissen Zeit wieder abgebaut.

Aufgabe der vorliegenden Erfindung ist es, dem Fahrzeugführer eine zusätzliche Rückmeldung zu geben, daß die Hillholderfunktion im Stadium der Deaktivierung ist und ein Lösen der Bremse unmittelbar bevorsteht.

Die Lösung dieser Aufgabe erfolgt gemäß den Merkmalen des Patentanspruches 1.

Insbesondere kann die Lösung der Aufgabe durch ein Verfahren zur Steuerung der Bremsanlage eines Fahrzeugs erfolgen, wobei in wenigstens einem ersten Betriebszustand bei betätigtem Bremspedal Bremskraft an wenigstens einem Rad des Fahrzeugs unabhängig vom Ausmaß der Pedalbetätigung gehalten wird, und wobei die Bremskraft nach Vorliegen eines zweiten Betriebszustandes abgebaut wird, wobei der Abbau der Bremskraft beim zeitgesteuerten Lösen in zwei Schritten erfolgt. Dabei kann der erste Schritt dem Abbau der Bremskraft in einem ersten Kreis eines Diagonalbremssystems und der zweite Schritt dem Abbau der Bremskraft in einem zweiten Kreis eines Diagonalbremssystems entsprechen.

Im Rahmen der Erfindung ist vorgesehen, das Reduzieren des Bremsdrucks beim zeitgesteuerten Lösen in zwei Schritten durchzuführen. In vorteilhafter Weise läßt sich dies mit den heute gebräuchlichen diagonal wirkenden Zweikreisbremsanlagen durchführen. Dabei wird zuerst ein Bremskreis drucklos geschaltet. Durch die dann auftretende diagonale Verspannung des Fahrzeugs wird eine zusätzliche Rückmeldung an den Fahrzeugführer gegeben, daß die Hillholderfunktion im Stadium der Deaktivierung ist und ein Lösen der Bremse unmittelbar bevorsteht. Diese Funktion läßt sich nicht nur mit der im Rahmen der nachstehend näher beschriebenen Hillholderfunktion durchführen, sondern ist bei allen Hillholderfunktionen anwendbar, bei denen ein diagonales Zweikreisbremssystem vorhanden ist, und die Steuerung der beiden Kreise unabhängig voneinander erfolgen kann.

Ein Verfahren zur automatischen Aktivierung einer Hillholderfunktion ist in zwei Verfahrensschritte unterteilt. Im ersten Schritt wird dabei eine Erkennung einer Neigung der Fahrbahn gegenüber der Längsachse des Fahrzeugs durchgeführt. In vorteilhafter Weise geschieht dies, indem die üblicherweise vorhandenen Signale für Fahrzeuggeschwindigkeit und Bremsdruck betrachtet werden. Bei einer Bremsung an einer Steigung wird bekanntermaßen ein Teil der kinetischen Energie des sich bewegenden Fahrzeugs in potentielle Energie umgewandelt, es ist also weniger kinetische Energie durch die Bremse in Wärme umzuwandeln. Das bedeutet, daß die Bremsleistung geringer ausfällt und damit auch ein geringerer Bremsdruck und damit Bremskraft nötig ist, um im Vergleich zu einer Bremsung auf einer Fahrbahn ohne Steigung das Fahrzeug zum Stillstand zu bringen.

Dem zweiten Schritt liegt der Gedanke zu Grunde, daß ein an einer Steigung zum Stillstand gebrachtes Fahrzeug mit der Betriebsbremse gegen Zurückrollen gesichert wird. Die Hillholderfunktion wird daher erst eingeschaltet, wenn die Betriebsbremse eine bestimmte Zeit bei stehendem Fahrzeug betätigt wird. Zum Anfahren kann dann in bekannter Weise z. B. der Bremsdruck erst nach einer vorgegebenen Zeit nach Lösen des Bremspedals kontrolliert abgebaut werden.

Damit wird ein Verfahren zur Durchführung einer zuverlässigen Hillholderfunktion bereitgestellt, das vollständig auf zusätzliche Sensoren oder Aktuatoren verzichtet. Voraussetzung ist allerdings, daß das Fahrzeug mit einer Bremsvorrichtung ausgestattet ist, die in der Lage ist, die Stabilisierung eines Fahrzeugs bei kritischen dynamischen Fahrzuständen durchzuführen. Eine solche Bremsvorrichtung wird auch Elektronisches Stabilitätsprogramm (ESP) oder Dynamische Stabilitätskontrolle (DSC) genannt.

Bei einer vorteilhaften Ausgestaltung wird an Stelle der oben beschriebenen Zeitverzögerung zum Abbau des Bremsdrucks nach Lösen des Bremspedals eine motorseitig gesteuerte Funktion verwendet. Berücksichtigt werden dabei die Signale von Bremsdruck, Motordrehzahl, die Ableitung der Motordrehzahl sowie die Gaspedalstellung bzw. die direkt von der Gaspedalstellung abhängige Stellung der Drosselklappe. Diese Größen sind vorhanden, bzw. können errechnet werden, so daß auch hier keine zusätzliche Sensorik - insbesondere kein Neigungssensor - nötig ist.

Weiterhin wird berücksichtigt, daß die Funktion nicht dazu geeignet ist, die Handbremse zu ersetzen. Deswegen ist vorgesehen, den Bremsdruck nach dem Lösen des Bremspedals nur für einen bestimmten Zeitraum aufrecht zu erhalten. Danach ist ein zeitgesteuertes Lösen des Bremsdrucks vorgesehen.

Weiterhin kann vorgesehen sein, daß die Hillholderfunktion durch den Fahrer aktiviert wird. Dies geschieht dadurch, daß - nach Stillstand des Fahrzeugs und Abwarten einer bestimmten Zeit bei weiter getretenem Bremspedal - eine zusätzliche kurze Druckerhöhung im Bremssystem durch Aufbringen einer zusätzlichen Kraft am Bremspedal durch den Fahrer die Hillholderfunktion aktiviert. Dieser Fuß-"Kick" aktiviert also die Hillholderfunktion. Es ist weiterhin vorstellbar, daß ein weiterer Fußkick die Hillholderfunktion wiederum ausschalten und ein erneuter Fußkick die Hillholderfunktion wieder aktiviert usw. Ein Ausschalten der Hillholderfunktion kann z. B. wünschenswert sein, wenn das an einer Steigung stehende Fahrzeug bewußt zurückrollen soll, um z. B. ein Ausweichen hinter einem zurückrollenden Fahrzeug vor dem Ablauf der zeitgesteuerten Lösefunktion zu ermöglichen.

Bei einer weiteren vorteilhaften Ausführung der Erfindung wird der Fahrzeuglenker vom Einschalten der Hillholderfunktion durch ein Signal in Kenntnis gesetzt. Dies kann z. B. durch ein akustisches oder optisches Signal erfolgen oder auch aus einer Kombination von akustischem und optischem Signal. Bei der Deaktivierung der Hillholderfunktion würde das Signal dann erlöschen.

In vorteilhafter Weise lassen sich auch die Funktionen der automatischen Aktivierung der Hillholderfunktion und das manuelle Aus- bzw. Einschalten der Hillholderfunktion durch den Fahrzeugführer miteinander kombinieren. So ist es z. B. denkbar, daß der Fahrzeugführer die automatische Aktivierung der Hillholderfunktion nutzt, aber die Deaktivierung manuell z. B. über den zuvor beschriebenen Fußkick durchführt.

Die Erfindung betrifft ferner eine Vorrichtung zur Steuerung einer Bremsanlage, die dazu geeignet ist, die beschriebenen Verfahren durchzuführen.

Die Erfindung wird anhand der in den beiliegenden Zeichnungen gezeigten Diagramme näher erläutert. Es zeigen:

Fig. 1    ein Diagramm eines typischen Verlaufs bei Nutzung des Verfahrens zur automatischen Anfahrhilfe, und

Fig. 2    ein Diagramm eines typischen Verlaufs der getriggerten Anfahrhilfe.

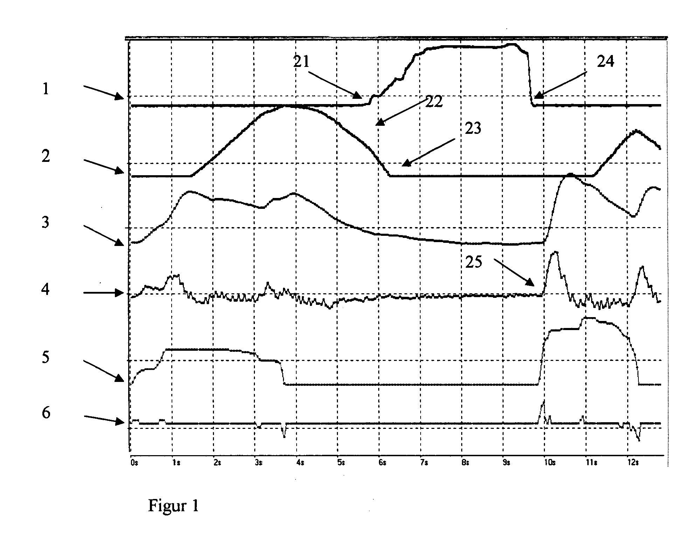

Figur 1 zeigt ein Diagramm mit einem typischen zeitlichen Verlauf einiger Fahrzeugparameter vor und während der Aktivierung der automatischen Anfahrhilfe. Aufgetragen sind dabei ein Bremsdruck 1, eine zugehörige Fahrzeuggeschwindigkeit 2, eine entsprechende Motordrehzahl 3, eine sich daraus ergebender Motordrehzahländerung 4, eine zugehörige Drosselklappenposition 5 sowie eine daraus abgeleitete Drosselklappenpositionsänderung 6. Der aufgezeichnete Bremsdruck 1 ist dabei der vom Fahrer durch die Pedalkraft ins Bremssystem gegebene Bremsdruck, also nicht der vom Bremssystem gehaltene Bremsdruck während der Aktivierung des Hillholders. Aus dem Verlauf der oben angeführten Fahrzeugparameter kann die Bedingung zum Aktivieren der Hillholderfunktion abgelesen werden. Genutzt werden dazu einige getriggerte Funktionen. Die Hillholderfunktion kann nur aktiviert werden, wenn das Fahrzeug zum Stillstand gekommen ist. Dieser Punkt ist mit Trigger 23 erreicht. Zusätzlich muß die mit Trigger 22 bezeichnete Bedingung erfüllt sein:

Beginnend mit einem von Null ansteigenden Bremsdruck, hier durch Trigger 21 gekennzeichnet, werden die diskreten synchronisierten Abtastwerte von Fahrzeuggeschwindigkeit V und Bremsdruck P auf Kontinuität hin untersucht. Der Kontinuitätsfaktor $K_f$ entspricht dem Quotienten aus der fortlaufenden Abtastzahl n und der Bedingung b:

$$K_f = b/n$$

Mit dem Zeitpunkt Trigger 21 werden n=0 und b=0 gesetzt. N inkrementiert bei jedem diskreten Abtastschritt, wohingegen b nur bei folgender Bedingung inkrementiert

$$P_{n-1} < P_n \quad \&\& \quad V_{n-1} >= V_n$$

Die Aktivierung wird jetzt ausgeführt, falls nach dem Stillstand des Fahrzeugs V=0 eine Wartezeit $t_{w1}$ abgelaufen ist und der Kontinuitätsfaktor über einem Schwellwert liegt:

$$K_f > K_{fSchwell.}$$

Trigger 24 und Trigger 25 werden für das automatische Lösen der Bremse beim Anfahren benötigt. Dabei zeigt Trigger 24 an, daß der Fahrer das Bremspedal gelöst hat und durch Trigger 25 wird angezeigt, daß die Motordrehzahl erhöht wurde und also ein Anfahren zu erwarten ist. Mittels dieser beiden Bedingungen ist dann die Vorraussetzung zur Deaktivierung der Hillholderfunktion gegeben.

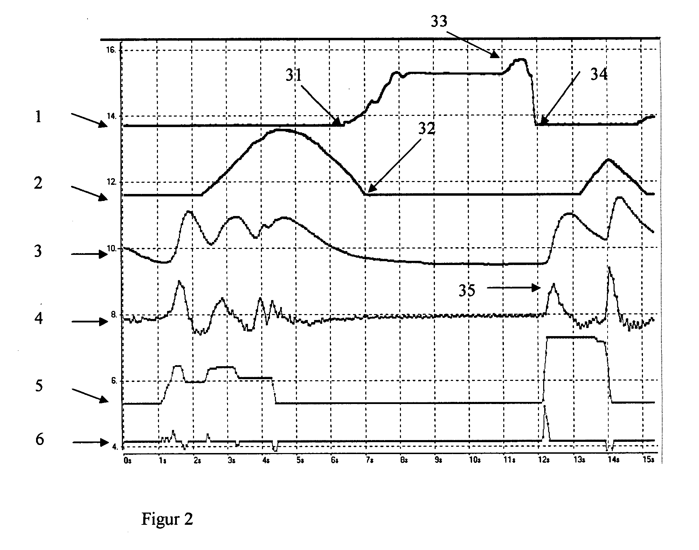

Figur 2 zeigt ein Diagramm mit einem typischen zeitlichen Verlauf einiger Fahrzeugparameter vor und während der Aktivierung der getriggerten Anfahrhilfe. Dabei wird das Fahrzeug bis zum Stillstand abgebremst. Nach einer spezifizierten Wartezeit $t_{w2}$ bei gehaltenem Bremsdruck wird eine kurze Erhöhung des Bremsdrucks durch den Fahrer erwartet, um die Funktion zu aktivieren.

Die Funktion wird somit durch einen Fußkick des Fahrers gezielt ausgelöst, unabhängig von der Längsneigung der Fahrbahn.

Der Stillstand des Fahrzeugs wird in Trigger 32 festgestellt, wobei Trigger 31 den Beginn der Bremsung kennzeichnet. Der Fußkick ist in der Abbildung mit Trigger 33 bezeichnet. Das Triggerkriterium ist sofort erfüllt, wenn die Ableitung des Bremsdrucks einen Schwellwert $P_{dyn}$ überschreitet:

$$dP/dt > P_{dyn}$$

Falls die Aktivierung nicht mehr benötigt wird, kann der Fahrer nun in der zeitlichen Sequenz durch einen weiteren Fußkick die Funktion wieder ausschalten.

Das Ausschalten kann ebenfalls erfolgen, indem der Fahrer das Bremspedal löst und vor dem zeitgesteuerten Abschalten der Funktion den Bremsdruck auf den zum Zeitpunkt Trigger 33 vorliegenden Wert wieder erhöht. Wie in Figur 1 sind Trigger 34 und 35 für das automatische Anfahren vorgesehen.

**Patentansprüche**

1. Verfahren zur Steuerung einer Bremsanlage eines Fahrzeugs mit einer Feststellbrems- bzw. Hillholderfunktion, bei der die Bremskraft an wenigstens einem Rad des Fahrzeugs unabhängig von der Betätigung eines Bremspedals gehalten und wieder abgebaut wird, wobei das Fahrzeug ein diagonales Zweikreisbremssystem aufweist, bei dem die Steuerung der beiden Kreise unabhängig voneinander erfolgen kann,
**dadurch gekennzeichnet, dass**
die Bremskraft nach Lösen des Bremspedals nur für einen bestimmten Zeitraum aufrecht erhalten wird, und dass der Abbau der Bremskraft bei der Hillholderfunktion derart in zwei Schritten erfolgt, dass eine diagonale Verspannung des Fahrzeugs als zusätzliche Rückmeldung an den Fahrzeugführer gegeben wird, um anzuzeigen, dass die Hillholder-Funktion im Stadium der Deaktivierung ist und ein Lösen der Bremse unmittelbar bevorsteht, wobei in einem ersten Schritt ein Abbau der Bremskraft in einem ersten Kreis eines Diagonalbremssystems und in einem zweiten Schritt ein Abbau der Bremskraft in einem zweiten Kreis eines Diagonalbremssystems vorgenommen wird, um die diagonale Verspannung hervorzurufen.

2. Verfahren nach Anspruch 1,
**dadurch gekennzeichnet, dass**
der Abbau der Bremskraft zeitgesteuert erfolgt.

3. Verfahren zur Steuerung der Bremsanlage eines Fahrzeugs nach Anspruch 1,
**dadurch gekennzeichnet, dass**
zum Abbau der Bremskraft eine motorseitige gesteuerte Funktion herangezogen wird.

4. Verfahren zur Steuerung der Bremsanlage eines Fahrzeugs nach Anspruch 3,
**dadurch gekennzeichnet, dass**
bei der motorseitigen gesteuerten Funktion nur die Signale für Bremsdruck (1), Motordrehzahl (3) und Gaspedalstellung berücksichtigt werden.

5. Vorrichtung zur Steuerung der Bremsanlage eines Fahrzeugs mit einer Feststellbrems- bzw. Hillholderfunktion, bei der die Bremskraft an wenigstens einem Rad des Fahrzeugs unabhängig von der Betätigung eines Bremspedals gehalten und wieder abgebaut wird, wobei das Fahrzeug ein diagonales Zweikreisbremssystem aufweist, bei dem die Steuerung der beiden Kreise unabhängig voneinander erfolgen kann,
**dadurch gekennzeichnet, daß**
die Steuerungsvorrichtung dahingehend ausgebildet ist, dass der Abbau der Bremskraft bei der Hillholderfunktion in zwei Schritten erfolgt, wobei der erste Schritt dem Abbau der Bremskraft in einem ersten Kreis eines Diagonalbremssystems und der zweite Schritt dem Abbau der Bremskraft in einem zweiten Kreis eines Diagonalbremssystems entspricht.

## Claims

1. Method for controlling a brake system of a vehicle having a parking brake or hill holder function in which the braking force at at least one wheel of the vehicle is held independently of the activation of a brake pedal and reduced again, wherein the vehicle has a diagonal dual-circuit brake system in which the two circuits can be controlled independently of one another,
   **characterized in that**
   the braking force is maintained for only a certain time period after the release of the brake pedal, and **in that**
   the reduction in the braking force during the hill holder function takes place in two steps in such a way that diagonal stressing of the vehicle is provided as additional feedback to the vehicle driver in order to indicate that the hill holder function is in the stage of deactivation and release of the brake is directly imminent, wherein
   in a first step the braking force is reduced in a first circuit of a diagonal brake system, and
   in a second step the braking force is reduced in a second circuit of a diagonal brake system in order to bring about the diagonal stressing.

2. Method according to Claim 1,
   **characterized in that**
   the braking force is reduced in a timed fashion.

3. Method for controlling the brake system of a vehicle according to Claim 1,
   **characterized in that**
   a motor-side, controlled function is used to reduce the braking force.

4. Method for controlling the brake system of a vehicle according to Claim 3,
   **characterized in that**
   in the motor-side, controlled function only the signals for brake pressure (1), engine speed (3) and position of the accelerator pedal are taken into account.

5. Device for controlling the brake system of a vehicle having a parking brake or hill holder function in which the braking force at at least one wheel of the vehicle is maintained independently of the activation of a brake pedal and reduced again, wherein the vehicle has a diagonal dual-circuit brake system in which the two circuits can be controlled independently of one another,
   **characterized in that**
   the control device is designed such that the reduction in the braking force during the hill holder function takes place in two steps, the first step corresponding to the reduction in the braking force in a first circuit of a diagonal brake system and the second step corresponding to the reduction in the braking force in a second circuit of a diagonal brake system.

## Revendications

1. Procédé de commande d'une installation de freinage d'un véhicule comprenant une fonction de frein de stationnement ou fonction Hillholder, la force de freinage étant maintenue au moins au niveau d'une roue du véhicule indépendamment de l'actionnement d'une pédale de frein et étant à nouveau relâchée, le véhicule présentant un système de freinage à deux circuits diagonal, la commande des deux circuits pouvant s'effectuer indépendamment l'un de l'autre,
   **caractérisé en ce que**
   la force de freinage ne peut être maintenue après le relâchement de la pédale de frein que pendant une période déterminée, et
   **en ce que** la réduction de la force de freinage dans le cas de la fonction Hillholder, s'effectue en deux étapes, de telle sorte qu'un serrage diagonal du véhicule soit utilisé comme information supplémentaire en retour au conducteur du véhicule, afin de l'informer que la fonction Hillholder est en cours de désactivation et qu'un desserrement des freins est imminent,
   une réduction de la force de freinage étant effectuée dans une première étape dans un premier circuit d'un système de freinage diagonal et
   une diminution de la force de freinage étant effectuée dans un deuxième circuit d'un système de freinage diagonal dans une deuxième étape, afin de provoquer le serrage diagonal.

2. Procédé selon la revendication 1,
   **caractérisé en ce que**
   la réduction de la force de freinage s'effectue de manière commandée dans le temps.

3. Procédé de commande de l'installation de freinage d'un véhicule selon la revendication 1,
   **caractérisé en ce que**
   on utilise une fonction commandée par un moteur en vue de réduire la force de freinage.

4. Procédé de commande de l'installation de freinage d'un véhicule selon la revendication 3,
   **caractérisé en ce que**
   dans le cas de la fonction commandée par un moteur, seuls les signaux de la force de freinage (1) du régime du moteur (3) et de la position de la pédale d'accélération sont pris en compte.

5. Dispositif de commande d'une installation de freinage d'un véhicule comprenant une fonction de frein de stationnement ou fonction Hillholder, la force de freinage étant maintenue au moins au niveau d'une roue du véhicule indépendamment de l'actionnement d'une pédale de frein et étant à nouveau relâchée, le véhicule présentant un système de freinage à deux circuits diagonal, la commande des deux circuits pouvant s'effectuer indépendamment l'un de l'autre,

   **caractérisé en ce que**
   le dispositif de commande est réalisé de manière à ce que la réduction de la force de freinage, dans le cas de la fonction Hillholder, s'effectue en deux étapes, la première étape correspondant à la réduction de la force de freinage dans un premier circuit d'un système de freinage diagonal et la deuxième étape correspondant à la réduction de la force de freinage dans un deuxième circuit d'un système de freinage diagonal.

Figur 1

EP 1 690 765 B1

Figur 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19931345
- DE 19621628
- DE 10128155 A1
- DE 19950034